Europäisches Patentamt

(19) European Patent Office

Office européen des brevets

(11) Publication number: **0 031 931**
**B1**

(12) **EUROPEAN PATENT SPECIFICATION**

(45) Date of publication of patent specification: **21.03.84**     (51) Int. Cl.³: **G 03 B  17/26**

(21) Application number: **80107954.2**

(22) Date of filing: **17.12.80**

(54) Film cartridge assembly with light sealing and pressure applying means.

(30) Priority: **26.12.79 US  106630**
**23.06.80 US  161792**
**04.02.80 US  118272**

(43) Date of publication of application:
**15.07.81 Bulletin 81/28**

(45) Publication of the grant of the patent:
**21.03.84 Bulletin 84/12**

(84) Designated Contracting States:
**BE CH DE FR GB IT LI**

(56) References cited:
**DE - A - 2 809 856**
**GB - A - 2 027 225**

(73) Proprietor: **EASTMAN KODAK COMPANY**
**343 State Street**
**Rochester New York 14650 (US)**

(72) Inventor: **Sethi, Gurdip S.**
**Kodak Park**
**Rochester New York (US)**

(74) Representative: **Blickle, K. Werner, Dipl.-Ing. et al,**
**KODAK AKTIENGESELLSCHAFT Postfach 369**
**D-7000 Stuttgart 60 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Film cartridge assembly with light sealing and pressure applying means

This invention relates to a photographic film cartridge assembly comprising a disk of photographic film, a casing enclosing the disk and having front and rear opaque walls, said front wall having an exposure window and said rear wall having an opening opposite said exposure window, a light sealing and pressure applying means within the casing which includes (a) a rigid portion movable into contact with the film to urge the film toward the exposure window when an external force is applied using the opening, and (b) a light sealing portion which prevents light from entering said casing through said opening, retaining means restricting movement of the light sealing and pressure applying means with respect to the rear wall.

DE—OS 28 09 856 discloses a film cartridge assembly having front and rear walls between which a disk of photographic film is rotatable to align image areas of the film with an exposure window in the front wall. The front and rear walls are formed of a rigid material to protect the film from reasonably expected rough handling. The exposure window in the front wall is large enough to provide access to the film for a camera film support surface. The rear wall has an opening opposite the exposure window which opening is covered by an opaque flexible membrane.

Fig. 18 of DE—OS 28 09 856 shows pressure applying and permanent light sealing means in the form of a rigid insert supported by the flexible membrane. The insert is movable into contact with the film to urge the film toward the exposure window when an external force is applied using the opening. With this structure the force is applied by a camera to hold the film flat against the camera film support surface during exposure. The force is relieved for film advance. The flexible membrane performs the multiple function of flexibly holding the pressure applying means so it can be moved toward the film, of restricting movement of the pressure applying means with respect to the rear wall and of blocking light both before and after the external force is removed.

Because of stresses imposed by a metering pawl and film drive on other portions of the film disk, flatness during exposure of a portion of a film disk is more difficult to achieve than flatness of roll film or sheet film. The rigid insert with the supporting flexible membrane shown in Fig. 18 of DE—OS 28 09 856 enables transmission of force more evenly than structures using only a light blocking flexible membrane. With this structure, the film disk is held sufficiently flat for a small format and medium aperture camera. However, if a wide aperture is used with a small format film disk camera, film flatness with this prior structure is not acceptable.

Other film types, for example, large format, rigid self-processing film units such as shown in US—PS 3 943 535 present little or no flatness problem. Further, since such known cartridges do remain in the camera until they are empty, no provision is necessary for light sealing means once the cartridge is inserted in the camera and the first film unit is expelled. Rather, a frangible light seal is provided that breaks after the cover sheet has been expelled. If the cartridge should be removed from the camera after the seal has been broken, no light seal will protect the film units.

Accordingly, it is the object of the invention to provide a cartridge assembly generally of the type described, but with pressure applying means providing improved flatness of the film disk during exposure.

This object is accomplished in that the rigid portion of said light sealing and pressure applying means is located between the rear wall and the disk, and covers the entire area of the opening and an area extending beyond its edges in all directions, and in that said light sealing portion comprises cooperating baffle structures on both said rear wall and said rigid portion to form a tortuous light path preventing light from the opening from reaching the film both before such an external force is applied and after it has been removed.

With such structure the membrane can be eliminated, which allows greater freedom of movement of the light sealing and pressure applying means, which, in turn, allows the rigid portion to lie flatter against the film. It is also less expensive to manufacture than structures in which the rigid member is supported by the membrane.

The cooperating baffle structures may take the form of a rib on the rear wall extending into a recess on the pressure applying means, the recess and rib surrounding the opening.

The light path may be made more tortuous by making the opening in the rear wall substantially smaller than prior art openings. A protrusion can be formed in the pressure applying means extending into the opening to assure reliability in camera interface.

According to one embodiment, the light-sealing and pressure applying means may be relatively rigid throughout and therefore movable as a unit toward the film. However, according to a preferred embodiment, it has been found that movement of the rigid portion is most unrestricted if the rigid portion is supported by flexible legs fixed to the rear wall at their extremities.

In the detailed description of the preferred embodiments of the invention presented below, reference is made to the accompanying drawings in which:

Fig. 1 is a front perspective view of a still picture camera which is suitable for use with a cartridge assembly in accordance with the present invention;

Fig. 2 is a rear perspective view of the still picture camera of Fig. 1 and of a film cartridge assembly in accordance with the present invention, showing the camera opened for receiving the cartridge assembly;

Fig. 3 is a front perspective view of the film cartridge assembly of Fig. 2;

Fig. 4 is a view in exploded perspective of an open cartridge assembly according to Figs. 2 and 3;

Fig. 5 is a sectional view of a portion of the cartridge assembly of Figs. 2—4 and a portion of the camera of Figs. 1 and 2.

Fig. 6 is a detailed front perspective view of a portion of the cartridge assembly of Figs. 2—5;

Fig. 7 is a back perspective view of light-sealing and pressure applying means taking the form of a pressure plate shown in Fig. 6;

Fig. 8 is a view in exploded perspective of a portion of the camera of Figs. 1 and 2;

Figs. 9 and 10 are detailed views of another embodiment of the pressure plate in accordance with the present invention in exploded and assembled form, respectively; and

Figs. 11 and 12 are detailed views of an embodiment of a locking device for a cover member.

The present invention is an improvement of the cartridge assembly described in aforementioned DE—OS 28 09 856. Any structure not shown herein may take the form shown in that application.

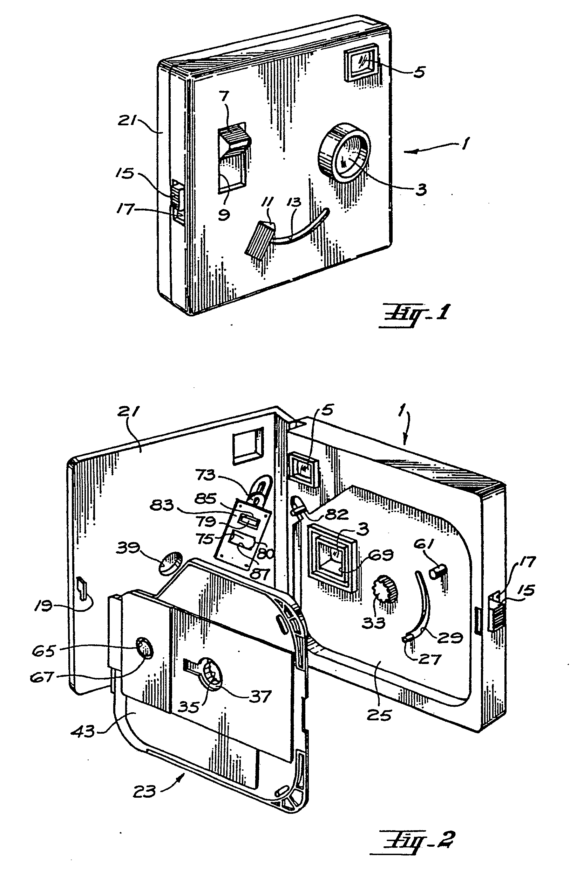

Referring now to the drawings and in particular to Figs. 1 and 2, there is shown a still-picture camera 1 which is similar in certain respects to the camera disclosed in European Patent Application 80 102 036.3 entitled Pressure Member Urging Mechanism filed on April 16, 1980 and published on October 29, 1980 as EP—A—17971. The camera front shown in Fig. 1 includes a picture-taking lens 3, a viewfinder 5, a shutter release button 7 movable along a slot 9, and a manual tab 11 movable along an arcuate slot 13. A locking tab 15 at one side of camera 1 is movable along a slot 17 to disengage from an internal latch 19 (Fig. 2) located on a rear door 21 of the camera, whereupon the rear door may be opened for loading a film cartridge assembly 23 into a receiving chamber 25 of the camera.

When cartridge assembly 23 is received in chamber 25, a pin 27, coupled to movable tab 11 and extending from an arcuate slot 29, engages cover member drive lugs 31 (Fig. 3) in the cartridge assembly. A splined rotatable film drive post 33, projecting into the camera chamber 25, extends through an opening 35 in a central core 37 of the received cartridge assembly. When loading door 21 is closed, post 33 extends into a recess 39 in the door.

The cartridge assembly of Figs. 2—4 includes front and rear opposed walls 41 and 43, respectively, joined together at one edge by a hinge 44 (Fig. 4). The terms "front" and "rear" are used in this specification and appendant claims with reference to the orientation of the cartridge assembly during actual use of the apparatus described. That is, the front of the cartridge would face along the camera's optical axis in a direction toward the taking lens.

Disposed between opposed walls 41 and 43 is a film unit 40, which includes central core 37 and a film disk 45 similar to that described in the aforementioned DE—OS 28 09 856.

Film disk 45 comprises a moderately flexible but self-supporting base sheet formed of, for example, cellulose acetate or poly(ethylene terephthalate). The base sheet carries photosensitive elements on one face thereof, thus providing a photographic imaging surface on which a latent photographic image can be recorded and subsequently photographically developed.

An opaque cover member 47 is rotatably carried on front wall 41 so that its fan-shaped leaf portion 49 can be moved into and out of alignment with an exposure window 51 in that casing wall. The passage of light rays through exposure window 51 and onto photosensitive film disk 45 when the cartridge assembly is not protectively encased by a camera is precluded by means of a leaf portion 49 and a separator layer 53. Separator layer 53 is formed of an opaque sheet material and has a framing window 55 aligned with exposure window 51 in casing wall 41.

Before the cartridge assembly is loaded into a camera, rotation of cover member 47 out of light blocking relationship with exposure window 51 and window 55 is inhibited by an abutment 57 and tooth 59.

When film cartridge assembly 23 is loaded into camera chamber 25, a pin 61 enters the cartridge assembly through an opening 63 to move abutment 57 from alignment with tooth 59. Now cover member 47 can be rotated by pin 27, and film unit 40 can be turned by incremental rotation of splined post 33. This moves successive exposure areas of film disk 45 across exposure window 51.

There is a possibility that, because of repeated or prolonged flexing of abutment 57, the abutment will take a set and not return to its locked position when the cartridge assembly is removed from a camera. In such an event, cover member 47 would be free to rotate, and ambient light could enter through exposure window 51, fogging at least a portion of film disk 45.

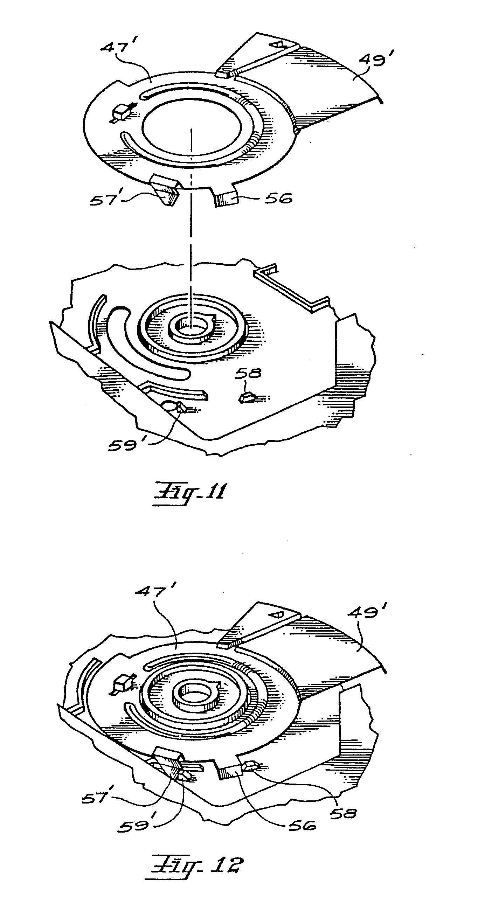

Although a malfunction is unlikely to occur, provision has been made, as shown in Figs. 11 and 12, to substantially reduce even the slight chance of inadvertent opening of the cover member. In those figures, elements which are similar to, and function in the same manner as, elements in the first embodiment have been denoted with the same reference numerals with prime marks added.

A second, flexible abutment 56 and a ramped tooth 58 have been added to form a detenting function to inhibit opening of cover member 47' even if the primary latch of abutment 57' and tooth 59' fail. The detent is not a lock and is overcome by a modest amount of torque on the cover member, but it provides sufficient restraint to reduce the chance of inadvertent opening movement of the cover member.

The cover member 47 or 47' is shown mounted for rotation about the same axis as the film unit 40. However, the cover member can be mounted to rotate about an axis displaced toward the exposure window 51 from the film unit axis. This construction saves space in the cartridge because the cover member will not extend as far from either axis in its uncovering position.

The camera includes a metering pawl, not shown, which extends through exposure window 51 to engage peripheral film disk notches 105 (two or which are shown in Fig. 4). The metering pawl must be removed from window 51 to allow the cover member 47 (or 47') to move to its covering position. Although this can be accomplished by shaping the pawl such that it is cammed out of the way by the cover member itself, this solution requires substantial force and can cause jams. As will be obvious to those skilled in the art, a better approach is to provide a cam or lever structure connecting the pawl and pin 27, removing the pawl whenever pin 27 begins to close the cover member and returning it into engagement with the film disk whenever pin 27 has fully opened the cover member. It is known in the art to couple members analogous to pin 27 and locking tab 15 to both open and close a cover member with the same structure which opens and closes the camera. Alternatively, pin 27 can be functionally connected to spline 33 or its drive mechanism to open the cover member in response to the first advancement of film unit 40, with closing of the cover member being accomplished by locking tab 15. Control of the metering pawl for cover member movement can be effected directly by any of these related structures through mechanical designs obvious to those skilled in the art.

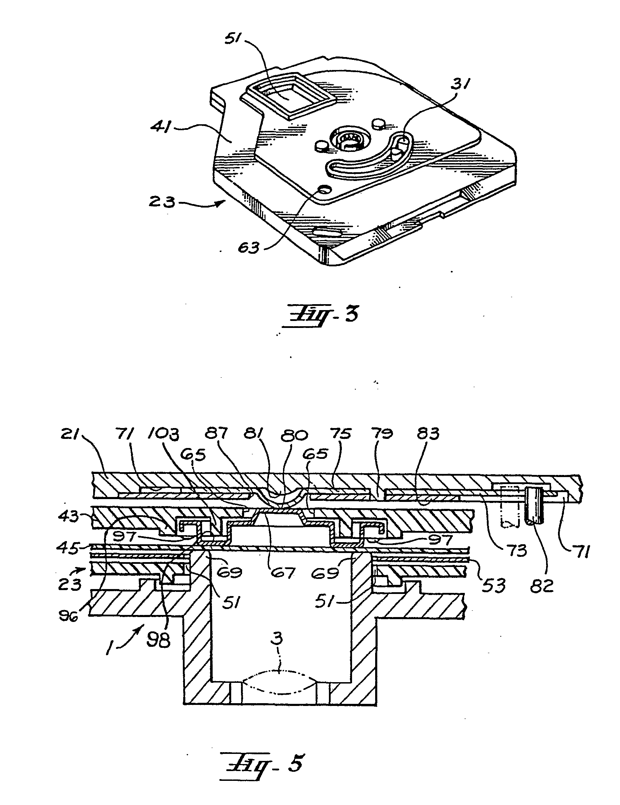

Rear wall 43 of cartridge assembly 23 has a circular opening 65, opposite exposure window 51 (Fig. 5). An opaque, rigid pressure plate 67 serving as light-sealing and pressure-applying means is received between the rear wall and film disk 45 and is movable toward and away from the exposure window 51. The pressure plate, in bearing against the rear surface of the film disk, presses the film disk into contact with a rectangular film support surface 69, projecting from the camera chamber 25 into exposure window 51. Through this interaction, an exposure area of film disk 45 is held substantially flat in an exposure plane coincident with the focal plane of picture-taking lens 3.

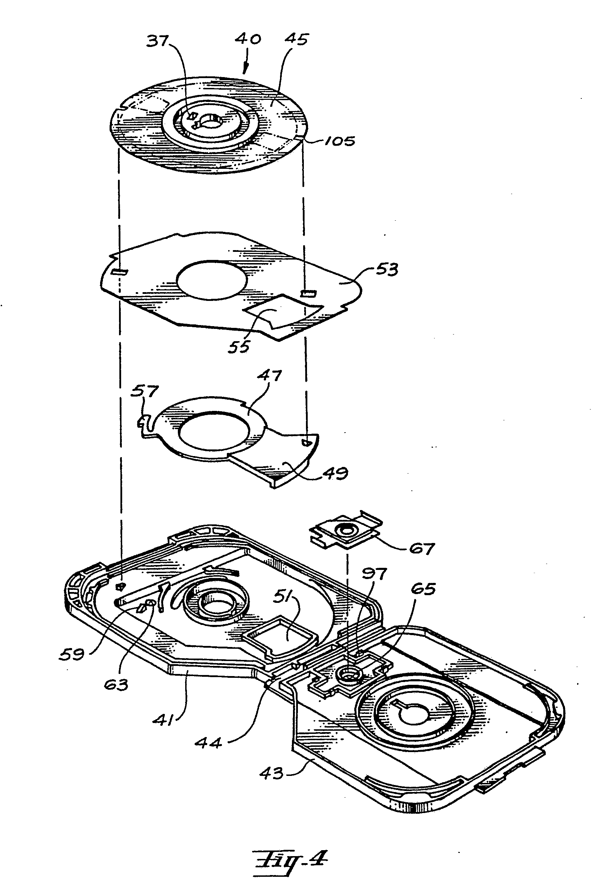

Pressure plate 67 and the adjacent surface of rear wall 43 are shown enlarged in Fig. 6 as they appear before assembly. The pressure plate preferably has a generally square configuration with a pair of oppositely extending legs 91 and 93. Rear wall 43 has a cavity 95 shaped to receive the pressure plate. The cavity may be a recess in the inner surface of the casing part or it may be formed by a raised rib as shown in Fig. 6.

Leg 91 has a dimension which is less than the corresponding dimension of leg 93. In the preferred embodiment, that dimension is the width of the leg. The mating portions of cavity 95 correspond to the different dimensions so that pressure plate 67 can be placed into the cavity in only one orientation during assembly.

A plurality of stake posts 97 are provided on rear wall 43 adjacent to the leg portions of cavity 95. After pressure plate 67 is inserted into the cavity, posts 97 are partially melted by high frequency vibratory energy to hold the pressure plate in the cavity. Alternatively, an inwardly projecting ridge could be provided around at least a portion of the periphery of cavity 95 so that pressure plate 67 would have a snap-fit in the cavity 95.

Pressure plate 67 has a raised surface 99 which is aligned with, and conforms generally to the shape of, rectangular film support surface 69 when the cartridge assembly is loaded into a camera. A center extension 101 extends into opening 65 in rear wall 43 so as to be presented to camera mechanism for urging the pressure plate against film disk 45.

An annular rib 103 extends into the cartridge assembly cavity around opening 65 so as to form, with a recess 98 in pressure plate 67, a tortuous light path or baffle to prevent light entering the cartridge casing through opening 65 from reaching film disk 45 around the pressure plate. An additional rib 96 surrounding the pressure plate contributes to the tortuous path. The rear surface of the pressure plate may be black to inhibit the reflection of such light.

One corner of raised surface 99 is recessed so that the camera's metering pawl may enter the cartridge assembly through exposure window 51 and engage film disk 45 in one of the disk's peripheral notches 105 without contacting pressure plate 67 on the rear side of the film disk.

One example of a mechanism for urging pressure plate 67 against the film disk is shown in Figs. 5 and 8. Loading door 21 of camera 1 includes a recess or relieved area 71 which defines a storage plane for a pressure plate urging member 73. The pressure plate urging member is preferably a substantially flat strip of resiliently flexible material, such as poly-(ethyleneterephthalate) and includes a tongue 75. The tongue has a forward or leading end 77 which abuts a stop 79, fixed to loading door 21 in recess 71. When pressure plate urging member 73 is moved generally to the right, in Fig. 5, leading end 77 of tongue 75 is held stationary. This causes an intermediate portion 80 of the tongue to flex and bow out of the recess, as in Fig. 5. A slight hump 81 may be provided in recess 71 beneach the intermediate or bowed portion 80 to facilitate such bowing of tongue 75. When pressure plate urging member 73 is moved generally to the left (Fig. 5), bowed portion 80 of tongue 75 substantially straightens, moving back into the storage plane defined by recess 71. Bowing of the tongue establishes a resilient or spring-like force in the bowed portion which may be used to return the pressure plate urging member generally to the left (Fig. 5). An apparatus for moving the pressure plate urging member generally to the right is described in aforementioned European Patent Application 80 102 036.3. Generally, an operating pin 82 controls the urging member's movement in accordance with the camera's shutter operation.

A constraining plate 83, having one opening 85 from which stop 81 protrudes and another opening 87 through which the bowed portion of tongue 75 protrudes, is secured to loading door 21, over pressure plate urging member 73. When the pressure plate urging member is moved generally to the right (Fig. 5), constraining plate 83 maintains the pressure plate urging member in the storage plane, except for bowed portion 80 of tongue 75 which moves through opening 87 in the constraining plate.

Referring to Fig. 5, bowed portion 80 of tongue 75 applies a force to pressure plate 67 which is thereby moved against film disk 45 to press the film disk into contact with camera film support surface 69, projecting into exposure window 51 of the film cartridge assembly. Whereupon, the film disk 45 is held substantially flat in the focal plane of picture-taking lens 3 for exposure.

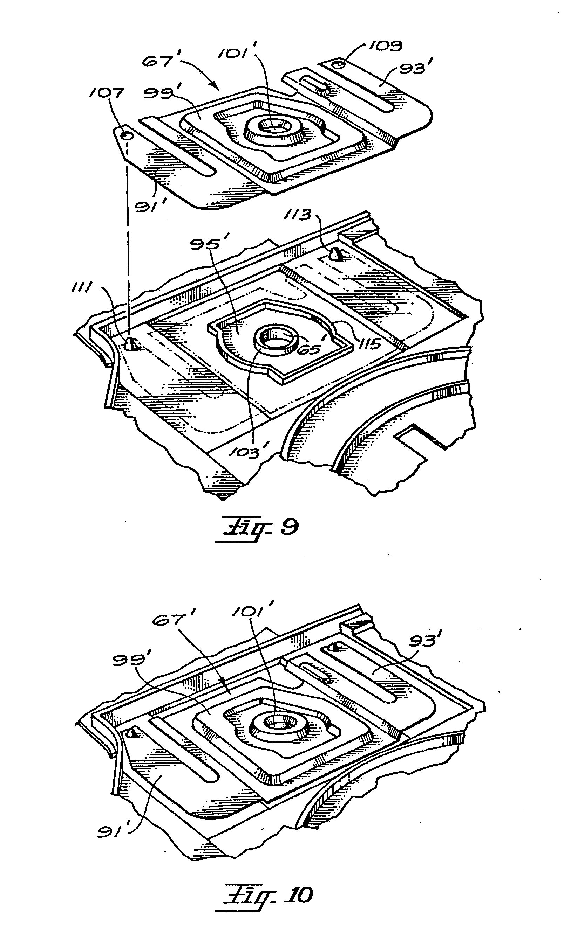

Figs. 9 and 10 show an alternative embodiment of the pressure plate, referred to by numeral 67' and having rigid central portion in the form of a raised surface 99' with a center extension 101' similar to those of the first embodiment pressure plate 67. A pair of flexible extending legs 91' and 93' have holes 107 and 109, respectively, which align with thermoplastic posts 111 and 113 on the rear wall. The legs 91' and 93' can be made flexible while the central portion is rigid by molding techniques well known in the art, for example, by molding the legs thinner than the rigid central portion or by molding hinges in the legs. However, if the pressure plate is made out of either metal or plastic and raised surface 99', and extension 101' are formed by stamping, thermoforming or similar process, the central portion will be relatively rigid while the long flat legs 91' and 93' will be relatively flexible even though the entire pressure plate 67' is substantially the same thickness.

When the pressure plate is assembled into the cartridge casing as in Fig. 10, posts 111 and 113 are deformed, as by an ultrasonic horn, over the top of legs 91' and 93' to retain the plate. A rib 115 extends into the recess below raised surface 99' to form a baffle structure which contributes to the tortuous light path.

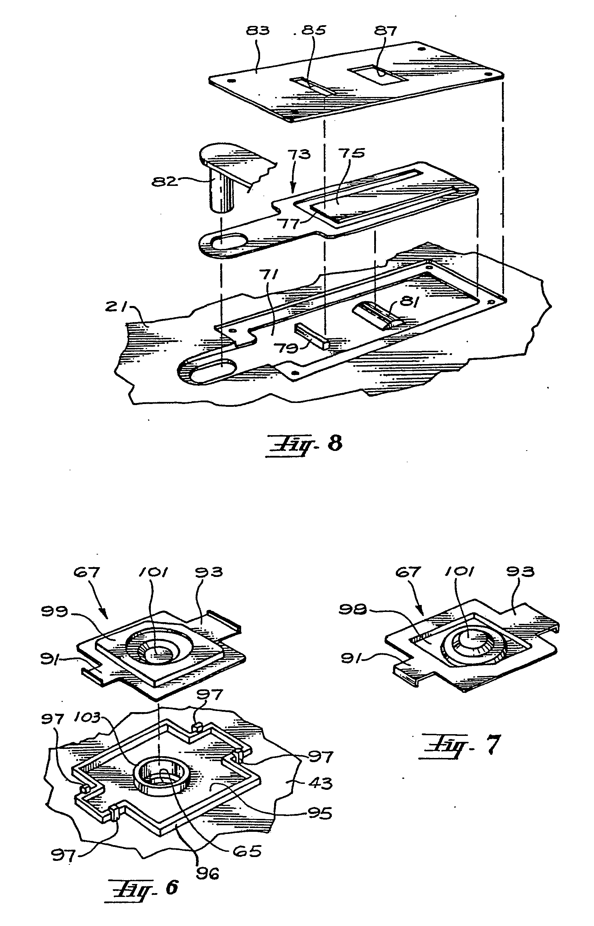

With the legs 91' and 93' shaped as shown in Figs. 9 and 10 and fastened to the rear wall at their extremities, only a slight flexing is necessary to provide relative freedom of movement for the rigid portion. This freedom of movement provides substantially improved performance in holding the film flat compared to prior art structures in which the rigid portion is held by a flexible membrane. The pressure member shown in Figs. 5, 6 and 7 having shorter legs is essentially rigid throughout, but is free to move in its retaining mechanism. In most instances, it is superior also to the prior art and provides acceptable results at a wide aperture. However, sliding friction associated with the retaining mechanism can in some instances hamper effectiveness and its freedom to move is controlled by stake posts 97, tolerances of which are more difficult to control in manufacture. In the embodiment shown in Figs. 9 and 10 the sliding friction is substantially eliminated and tolerances in retention are better. Thus, this embodiment provides the best results. Both structures are much easier to manufacture than prior structures in which a flexible membrane is fixed both to the pressure plate and the back wall.

**Claims**

1. A photographic film cartridge assembly comprising:

a disk (45) of photographic film,

a casing enclosing the disk and having front (41) and rear (43) opaque walls, said front wall (41) having an exposure window (51) and said rear wall (43) having an opening (65) opposite said exposure window (51),

a light sealing and pressure applying means (67; 67') within the casing which includes (a) a rigid portion (99; 99') movable into contact with the film to urge the film toward the exposure window (51) when an external force is applied using the opening, and (b) a light sealing portion which prevents light from entering said casing through said opening,

retaining means (97; 111, 113) restricting movement of the light sealing and pressure applying means (67, 67') with respect to the rear wall (43),

characterized in that the rigid portion (99; 99') of said light sealing and pressure applying means is located between the rear wall (43) and the disk (45), and covers the entire area of the opening (65) and an area extending beyond its edges in all directions, and in that said light sealing portion comprises cooperating baffle structures (103, 98, 96; 103', 115) on both said rear wall (43) and said rigid portion (99, 99') to form a tortuous light path preventing light from the opening (65) from reaching the film both before such an external force is applied and after it has been removed.

2. A photographic film cartridge assembly according to claim 1, wherein said baffle structures comprise a recess (98) on the side of said light sealing and pressure applying means (67) facing the rear wall (43) of the cartridge assembly and a rib (103, 115) on the rear wall (43) surrounding the opening (65) and extending into said recess (98).

3. A photographic film cartridge assembly according to claim 1 or 2, wherein said light sealing and pressure applying means (67; 67') includes a portion (101; 101') which extends into the opening (65) in the rear wall (43) so as to be engagable by a pressure applying member (73) of a camera (1) in which the cartridge assembly (23) is to be received.

4. A photographic film cartridge assembly according to any of claims 1—3, wherein said rigid portion includes a raised, generally rectangular frame-shaped surface (99, 99') facing the exposure window (51) and positioned to be aligned with a film support surface (69) of a camera (1) in which the cartridge assembly (23) is to be received.

5. A photographic film cartridge assembly according to claim 4 as dependent upon claim 2, wherein said raised surface (99; 99') is directly opposite the recess (98).

6. A photographic film cartridge assembly according to any of claims 1—5, wherein the entire light sealing and pressure applying means (67) is rigid and movable toward the photographic film.

7. A photographic film cartridge assembly according to any of claims 1—6, wherein said light sealing and pressure applying means (67') includes two integrally molded legs (91', 93') and said retaining means (111, 113) is fixed to the extremities of said legs (91', 93') and wherein said legs (91', 93') are flexible to permit movement of the rigid portion (99') toward the exposure window (51).

**Patentansprüche**

1. Photographische Filmkassetteneinheit mit einer photographischen Film aufweisenden Scheibe (45), einem Gehäuse, das die Scheibe umschließt und eine lichtundurchlässige Vorderwand (41) und eine lichtundurchlässige Rückwand (43) besitzt, wobei die Vorderwand (41) ein Belichtungsfenster (51) und die Rückwand (43) eine dem Belichtungsfenster (51) gegenüberliegende Öffnung (65) aufweist, einer in dem Gehäuse angeordneten Lichhschutz- und Andrückeinrichtung (67; 67'), die (a) einen starren Abschnitt (99, 99') enthält, der mit dem Film in Berührung gabracht werden kann, um diesen gegen das Belichtungsfenster (51) zu drücken, wenn unter Verwendung der Öffnung von außen eine Kraft ausgeübt wird, und (b) einen lichtdichten Abschnitt, der verhindert, daß durch die Öffnung Licht in das Gehäuse fällt, und Haltemitteln (97; 111, 113) zum Begrenzen der Bewegung der Lichtschutz- und Andrückeinrichtung (67, 67') gegenüber der Rückwand (43), dadurch gekennzeichnet, daß der starre Abschnitt (99; 99') der Lichtschutz- und Andrückeinrichtung zwischen der Rückwand (43) und der Scheibe (45) angeordnet ist und den gesamten Bereich der Öffnung (65) sowie eine in allen Richtungen über deren Kanten hinwegragende Fläche abdeckt und daß der lichtdichte Abschnitt auf der Rückwand (43) und auf dem starren abschnitt (99, 99') miteinander zusammenwirkende Lichtschutzelemente (103; 98, 96; 103', 115) aufweist, derart, daß eine gewundene Lichtleitbahn entsteht, die verhindert, daß vor Anwendung einer Kraft von außen her oder nach Beendigung der Kraftanwendung durch die Öffnung (65) Licht auf den Film fällt.

2. Photographische Filmkassetteneinheit nach Anspruch 1, worin die Lichtschutzelemente eine Vertiefung (98) umfassen, die auf der Seite der Lichtschutz- und Andrückeinrichtung (67) zur Rückwand (43) der Kassetteneinheit wiesend angeordnet ist, sowie eine auf der Rückwand (43) befindliche Rippe (103, 115), welche die Öffnung (65) umgibt und in die Vertiefung (98) hineinragt.

3. Photographische Filmkassetteneinheit nach Anspruch 1 oder 2, worin die Lichtschutz- und Andrückeinrichtung (67; 67') einen Abschnitt (101; 101') aufweist, der derart in die Öffnung (65) der Rückwand (43) hineinragt, daß er mit einem Andrückglied (73) einer Kamera (1) in Eingriff gelangen kann, in die die Kassetteneinheit (23) einsetzbar ist.

4. Photographische Filmkassetteneinheit nach einem der Ansprüche 1 bis 3, worin der starre Abschnitt eine erhöhte, allgemein rechteckige, rahmenförmige Fläche (99, 99') aufweist, die dem Belichtungsfenster (51) zugewandt und so angeordnet ist, daß sie mit einer Filmauflagefläche (69) einer Kamera (1) ausgerichtet ist, in die die Kassetteneinheit (23) einsetzbar ist.

5. Photographische Filmkassetteneinheit nach Anspruch 4 in Verbindung mit Anspruch 2, worin sich die erhöhte Fläche (99; 99') direkt gegenüber der Vertiefung (98) befindet.

6. Photographische Filmkassetteneinheit nach einem der Ansprüche 1 bis 5, worin die gesamte Lichtschutz- und Andrückeinrichtung (67) starr ausgebildet und zu dem photographischen Film hin bewegbar ist.

7. Photographische Filmkassetteneinheit nach einem der Ansprüche 1 bis 6, worin die Lichtschutz- und Andrückeinrichtung (67') zwei an ihr angeformte Arme (91', 93') aufweist und die Haltemittel (111, 113) an den äußersten Enden der Arme (91', 93') befestigt sind und worin die Arme (91', 93') flexible ausgebildet sind und so eine Bewegung des starren Abschnitts (99') zu dem Belichtungsfenster (51) hin erlauben.

## Revendications

1. Chargeur pour film photographique comprenant:

— un disque (45) de pellicule photographique,
— étui emprisonnant le disque et présentant des parois opaques antérieure (41) et postérieure (43) où cette paroi antérieure (41) est percée d'une fenêtre d'exposition (51) et cette paroi postérieure (43) est percée d'un regard (65) à l'opposé de cette fenêtre d'exposition (51),
— des moyens d'étanchéité à la lumière et presseur (67; 67') dans l'étui qui sont munis (a) d'une partie rigide (99, 99') mobile pour venir au contact du film afin de pousser ce dernier vers la fenêtre d'exposition (51) quand une force extérieure est appliqué par l'entremise du regard, et (b) d'une partie assurant l'étanchéité à la lumière interdit à la lumière de pénêtrer dans l'étui par le regard,
— des moyens de retenue (97, 111, 113) entravant le déplacement des moyens d'étanchéité à la lumière et presseur (67, 67') par rapport à la paroi postérieure (43), caractérisé en ce que la partie rigide (99, 99') de ces moyens d'étanchéité à la lumière et presseur est disposée entre la paroi postérieure (43) et le disque (45), et couvre la totalité de la surface du regard (65) et une zone s'étendant au-delà de ses bords dans toutes les directions, et en ce que la partie assurant l'étanchéité à la lumière comprend des structures écran coopérantes (103, 98, 96, 103', 115) à la fois sur la paroi postérieure (43) et la partie rigide (99, 99') pour former une chicane empêchant la lumière venant du regard (65) d'atteindre le film aussi bien avant l'application d'une telle force extérieure qu'après sa neutralisation.

2. Chargeur pour film photographique conforme à la revendication 1, où ces structures-écran comprennent un embrèvement (98) sur la face des moyens d'étanchéité à la lumière et presseur (67) en regard de la paroi postérieure (43) du chargeur et une collerette (103, 115) sur la paroi postérieure (43) entourant le regard (65) et s'étendant dans cet embrèvement (98).

3. Chargeur pour film photographique conforme à la revendication 1 ou 2 dans lequel les moyens d'étanchéité à la lumière et presseur (67, 67') comprennent une partie (101, 101') qui s'engage dans le regard (65) de la paroi postérieure (43) de manière qu'un organe de sollicitation (73) d'un appareil (1) puisse venir à son contact lorsqu'un chargeur (23) a été placé dans ce dernier.

4. Chargeur pour film photographique conforme à l'une quelconque des revendications 1—3 où la partie rigide comprend une surface en forme de cadre rectangulaire en saillie (99, 99') en regard de la fenêtre d'exposition (51) et placée pour être à l'aplomb d'une surface d'appui (69) du film d'un appareil (1) garni du chargeur (23).

5. Chargeur pour film photographique conforme à la revendication 4 dans la mesure où elle dépend de la revendication 2 où la surface en saillie (99, 99') est exactement en face de l'embrèvement (98).

6. Chargeur pour film photographique conforme à l'une quelconque des revendications 1—5 où la totalité des moyens d'étanchéité à la lumière et presseur (67) sont rigides et mobiles en direction du film photographique.

7. Chargeur pour film photographique conforme à l'une quelconque des revendications. 1—6 où les moyens d'étanchéité à la lumière et presseur (67') comprennent deux pattes (91', 93') venues de moulage d'un bloc et ces moyens de retenue (111, 113) sont fixés à l'extrémité de ces pattes (91', 93') et où ces pattes (91', 93') sont flexibles pour permettre le déplacement de la partie rigide (99') en direction de la fenêtre d'exposition (51).

Fig.-1

Fig.-2

_Fig - 3_

_Fig - 5_

2

*Fig.4*

*Fig.* 8

*Fig.* 6

*Fig.* 7

_Fig. 9_

_Fig. 10_

47′

49′

57′        56

58

59′

$\underline{Fig. 11}$

47′

49′

57′

59′      56    58

$\underline{Fig. 12}$